# EUROPÄISCHE PATENTSCHRIFT

(11) **EP 1 190 965 B1**
(45) Veröffentlichungstag und Bekanntmachung des Hinweises auf die Patenterteilung: **16.03.2005**
(21) Anmeldenummer: 01122229.6
(22) Anmeldetag: 17.09.2001
(51) Int. Cl.: B65G 9/00

(54) **Fördergutträger zum Transport von Fördergut in einer Hängefördereinrichtung**
Load carrier for conveyance of items in an overhead conveyor system
Porte-charges pour le transport d'articles dans un système de convoyeur aérien

(30) Priorität: 21.09.2000 DE 20016411 U
(43) Veröffentlichungstag der Anmeldung: 27.03.2002
(73) Patentinhaber: WF Logistik GmbH, 86899 Landsberg (DE)
(72) Erfinder: Bergemann, Horst, 86899 Landsberg (DE)
(74) Vertreter: Tiesmeyer, Johannes, Dr.

(56) Entgegenhaltungen:
- DE-A- 3 318 381
- DE-U- 9 106 793
- DE-U- 9 413 176

## Beschreibung

Die Erfindung betrifft einen Fördergutträger zum Transport von Fördergut in einer Hängefördereinrichtung, wobei der Fördergutträger Laufrollen aufweist, mit denen er an einer Laufschiene der Fördereinrichtung hängend abstützbar und dabei längs der Laufschiene verfahrbar ist, und wobei der Fördergutträger an seinen entgegengesetzten Längsenden jeweils wenigstens einen insbesondere U-förmigen Kopplungsbügel mit zwei in Längsrichtung des Fördergutträgers hintereinander liegenden Bügelschenkeln aufweist, deren freie Enden in der Transportanordnung des Fördergutträgers an der Laufschiene seitlich nach unten weisen und die einen Zwischenraum begrenzen, in den ein äußerer Bügelschenkel eines dem Fördergutträger auf einer Laufschiene benachbarten, gleichartigen Fördergutträgers einführbar ist, um die Fördergutträger zur Bildung eines Zuges aneinander zu koppeln.

Es sind sogenannte Fördergutträger-Trolleys bekannt, welche zwei mit Laufrollen ausgestattete Laufwerke und ein die Laufwerke miteinander verbindendes Traggestänge aufweisen, das als Transporthalterung für Fördergut im Förderbetrieb dient. Bei dem Traggestänge kann es sich z.B. um eine Stange handeln, an die Kleiderbügel mit daran befindlicher Kleidung gehängt werden können.

Die Laufwerke dieser bekannten Fördergutträger-Trolleys weisen V-förmige Rollenhalterungsbügel auf, die an ihren beiden freien Bügelschenkelenden jeweils eine drehbar gelagerte Laufrolle aufweisen. Die Laufrollen sind geneigt zueinander und in Bezug auf eine vertikale Mittenebene des Laufrollenhalterungsbügels symmetrisch zueinander angeordnet, so dass sie sich mit ihrem jeweiligen Rollenumfang an einer Laufschiene abstützen können, deren Laufflächen entsprechend geneigt zueinander nach Art eines Satteldaches verlaufen. In der Transportanordnung an der Laufschiene stützen sich die beiden Laufrollen eines Laufwerkes somit an den schräg nach oben weisenden Laufflächen der Laufschiene ab, wohingegen sich der Laufrollenhalterungsbügel unter der Laufschiene hindurch erstreckt.

An ihren unteren Enden sind die Laufwerke mit dem Traggestänge verbunden, so dass sich das Traggestänge bei geradem Streckenverlauf vertikal unter der Laufschiene befindet. Die bekannten Fördergutträger-Trolleys weisen an ihren entgegengesetzten Längsenden Kopplungsbügel auf. Kopplungsbügel einander benachbarter Fördergutträger sind miteinander in Eingriff bringbar, um die Fördergutträger zur Bildung eines Zuges auf der Laufschiene miteinander zu koppeln.

Die Kopplungsbügel weisen im Wesentlichen U-Form auf, wobei die freien Enden der Bügelschenkel in der Transportanordnung des Fördergutträger-Trolleys an der Laufschiene seitlich nach unten weisen. Die Kopplungsbügel an den entgegengesetzten Enden des Fördergutträger-Trolleys sind zu verschiedenen Seiten geneigt. Eine Kopplung zweier benachbarter Fördergutträger-Trolleys gleicher Bauart kann auf einfache Weise dadurch erfolgen, dass die beiden einander benachbarten äußeren Bügelschenkel der Fördergutträger-Trolleys in den jeweiligen Zwischenraum zwischen den Bügelschenkeln des betreffenden anderen Fördergutträger-Trolleys eingefügt werden, so dass die Kopplungsbügel miteinander verhakt werden. Die Kopplungsbügel stellen sehr einfach und wirtschaftlich herstellbare Kopplungsmittel dar, welche nach Bedarf ein Koppeln bzw. Entkoppeln der Fördergutträger auf einfache Weise ermöglichen.

Ein Fördergutträger der vorstehend erläuterten Art ist z.B. aus der DE 91 06 793 U1 bekannt.

Derartige Fördergutträger-Trolleys haben sich in der Praxis sehr gut bewährt. Es hat sich jedoch gezeigt, dass es beim Schieben bzw. Ziehen von aneinander gekoppelten Fördergutträger-Trolleys mit deutlich unterschiedlich schwerer Fördergutbeladung zu einer unbeabsichtigten Entkopplung der Fördergutträger-Trolleys kommen kann, was sich störend auf den Förderbetrieb auswirkt.

Aus der DE 94 13 176 U1 sind Fördergutträger mit Kopplungselementen bekannt, die um eine normalerweise vertikale Achse drehbar an den Längsenden der jeweiligen Fördergutträger befestigt sind, wobei der äußere Hakenschenkel des jeweiligen Kopplungselementes an seinem freien Ende eine Abwinklung aufweist. Zur Kopplung zweier in Förderrichtung aufeinander folgender Fördergutträger werden die einander benachbarten Hakenschenkel miteinander in Eingriff gebracht. Die Abwinkelungen an den freien Enden der Hakenschenkel haben in gewissem Maße die Funktion einer Verhakungssicherung, insbesondere auch bei Kurvenfahrt der Fördergutträger. Ein Nachteil der aus der DE 94 13 176 U1 bekannten Fördergutträger liegt darin, dass die Kupplungselemente unter Einbeziehung ihrer Drehgelenke zur Realisierung ihres Drehfreiheitsgrades um die vertikale Achse einen vergleichsweise aufwendigen Aufbau aufweisen.

Aus der DE 33 18 381 A1 sind Fördergutträger mit Kopplungsvorrichtungen bekannt, welche an ihren. Längsenden Hakenelemente aufweisen, wobei die Hakenenden nur in der horizontalen Ebene gekrümmt sind, so dass bei diesen bekannten Fördergutträgern insoweit auch von dem aus der DE 94 13 176 U1 bekannten Prinzip Gebrauch gemacht wird.

Aufgabe der Erfindung ist es, einen Fördergutträger der eingangs genannten Art mit einfachen Mitteln dahingehend zu verbessern, dass er in unverändert einfacher Weise mit gleichartigen Fördergutträgern zu einem Zug gekoppelt werden kann, wobei er im Zug jedoch eine größere Sicherheit gegen unbeabsichtigtes Entkoppeln vom benachbarten Trolley bietet. Zur Lösung dieser Aufgabe wird ausgehend von einem Fördergutträger mit den Merkmalen des Oberbegriffs des Anspruchs 1 erfindungsgemäß vorgeschlagen, dass wenigstens einer der Bügelschenkel der jeweiligen Kopplungsbügel einen in den gemeinsamen Zwischenraum hineinreichenden Vorsprung aufweist, so dass der Zwischenraum wenigstens eine lokal begrenzte Engstelle aufweist.

Die Engstelle sollte so beschaffen sein, dass ein äußerer Bügelschenkel eines benachbarten, dem Fördergutträger gleichartigen Fördergutträgers durch die Engstelle hindurch weiter in den Zwischenraum einführbar ist, um eine Kopplung herzustellen.

Der Vorsprung ist so gestaltet, dass er eine weitgehend zuverlässige Sicherung des Fördergutträgers gegen unbeabsichtigtes Entkoppeln von einem in einem Fördergutträgerzug benachbarten Fördergutträger bietet und dass er andererseits den Vorgang des Ankoppelns eines benachbarten Fördergutträgers bei der Bildung eines Zuges nicht oder nur unwesentlich im Vergleich mit dem Kopplungsvorgang bei den oben beschriebenen Fördergutträger-Trolleys nach dem Stand der Technik erschwert.

Gemäß einer Ausführungsform der Erfindung ist der Vorsprung durch ein am freien Ende eines Bügelschenkels des betreffenden Kopplungsbügels vorgesehenes Element gebildet. Dieses Element ist vorzugsweise ein Kunststoffelement oder Gummielement, das auf das freie Ende des Bügelschenkels aufgesteckt und ggf. mit dem Bügelschenkel verklebt ist. Das aufgesteckte Element kann z.B. die Form eines konischen Hütchens aufweisen, dessen breitere Basis das äußerste freie Ende des Bügelschenkels bildet.

Als Element zur Bildung eines Vorsprungs am Bügelschenkel kann auch eine Manschette, beispielsweise Kunststoffmanschette bzw. Gummimanschette, herangezogen werden, die auf den üblicherweise aus Metall gefertigten Bügelschenkel aufgesetzt wird. Mit einer solchen Manschette kann erreicht werden, dass der Vorsprung im Abstand vom freien Ende des von der Manschette umgebenen Bügelschenkels weiter innen in dem Zwischenraum liegt.

Gemäß einer Variante der Erfindung ist der Vorsprung aus einem elastisehen Material, insbesondere aus Kunststoff oder/und Gummi gebildet, wobei die Engstelle vorzugsweise so bemessen ist, dass sie von dem äußeren Bügel eines benachbarten Fördergutträgers unter elastischer Verformung des Vorsprungs bei der Kopplung der Fördergutträger passierbar ist.

Gemäß einer weiteren Ausführungsform der Erfindung kann der Vorsprung durch eine lokale Materialverdickung des betreffenden Bügelschenkels realisiert sein. Eine solche Materialverdickung kann z.B. durch Materialauftrag, etwa durch Schweißen oder dgl., hergestellt werden.

Ausführungsbeispiele der Erfindung werden im Folgenden unter Bezugnahme auf die Figuren näher erläutert.
- Fig. 1a: zeigt in einer Seitenansicht zwei zu einem Zug miteinander gekoppelte Fördergutträger nach der Erfindung, wobei die Fördergutträger hinsichtlich der Ausgestaltung der Kopplungsbügel ein erstes Ausführungsbeispiel der Erfindung repräsentieren.
- Fig. 1b: zeigt in einer Seitenansicht zwei zu einem Zug miteinander gekoppelte Fördergutträger nach der Erfindung, wobei die Fördergutträger hinsichtlich der Ausgestaltung der Kopplungsbügel ein zweites Ausführungsbeispiel der Erfindung repräsentieren.
- Fig. 2: zeigt in einer Vorderansicht einen Fördergutträger der in den Figuren 1a und 1b dargestellten Bauart an einer Laufschiene.
- Fig. 3a: zeigt ein vergrößertes Detail aus Fig. 1 a, nämlich den linken Endbereich des Fördergutträgerzuges.
- Fig. 3b: zeigt ein vergrößertes Detail aus Fig. 1b, nämlich den linken Endbereich des in Fig. 1b dargestellten Fördergutträgerzuges.
- Fig.4 und Fig. 5: zeigen in einer Ansicht entsprechend der Fig. 3a, 3b zwei weitere Varianten von Kopplungsbügeln an Fördergutträgern nach der Erfindung.
- Fig. 6: zeigt in einer Seitenansicht den rechten Endbereich eines Ausführungsbeispiels eines Fördergutträgers nach der Erfindung.
- Fig. 7: zeigt einen Kopplungsbügel eines weiteren Ausführungsbeispiels der Erfindung.

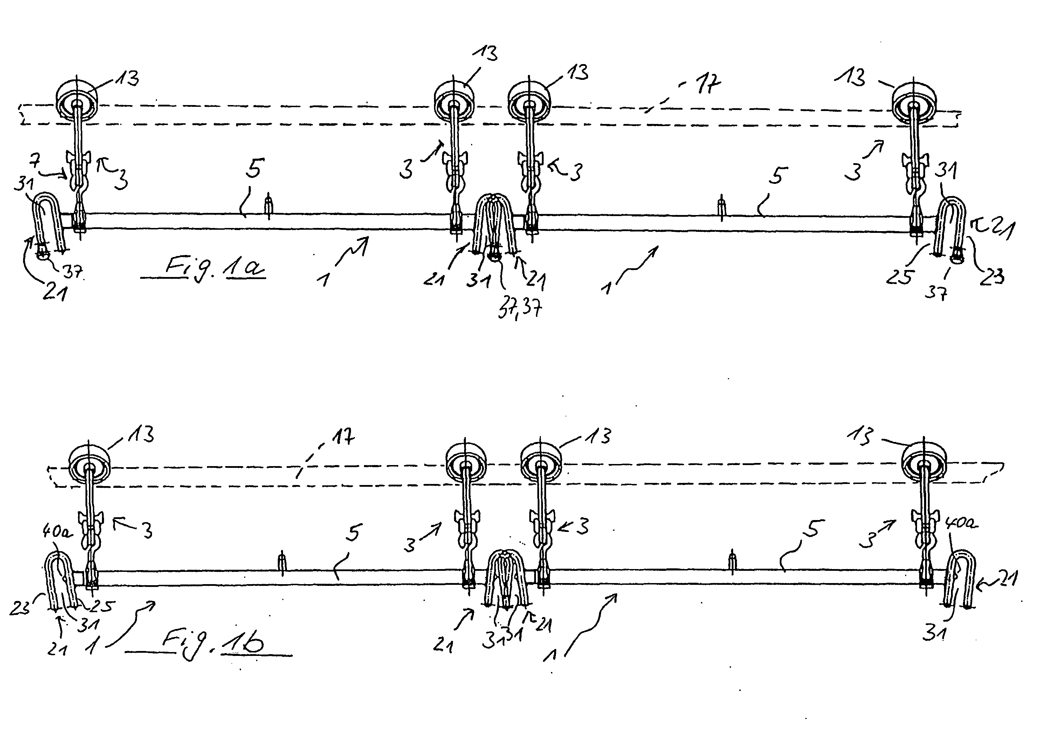

Gemäß Fig. 1a und Fig. 1b handelt es sich bei den gezeigten Ausführungsbeispielen der Erfindung um Fördergutträger-Trolleys 1 mit jeweils zwei Laufwerken 3, die durch eine Tragstange 5 miteinander verbunden sind.

Die jeweilige Verbindung zwischen dem unteren Ende des Laufwerks 3 und dem zugeordneten Längsende der Tragstange 5 erfolgt mittels einer gesicherten Einhakverbindung 7, die eine gelenkige Kopplung zwischen Laufwerk 3 und Tragstange 5 darstellt.

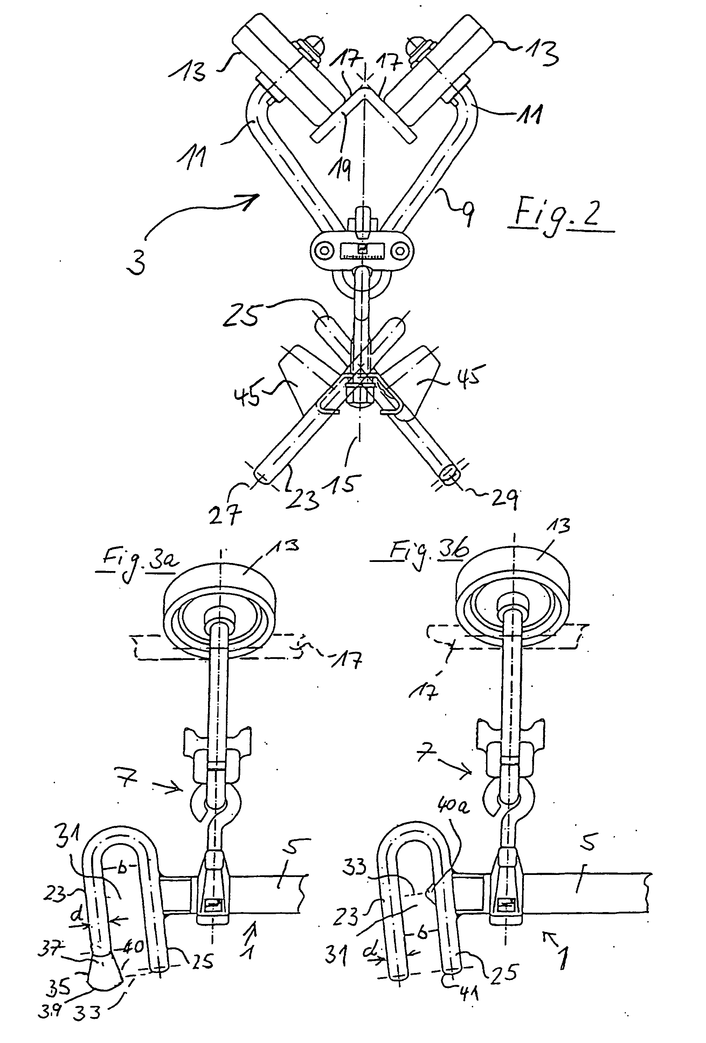

Der Aufbau eines Laufwerks 3 ist aus Fig. 2 deutlicher zu erkennen. Das Laufwerk 3 umfasst einen in Vorderansicht näherungsweise V-förmigen Rollenhalterungsbügel 9, an dessen freien Bügelschenkelenden 11 Laufrollen 13 drehbar gelagert sind. In Bezug auf die bei 15 in Fig. 2 angedeutete vertikale Mittenebene sind die Laufrollen 13 symmetrisch und schräg zueinander angeordnet, so dass sie auf den seitlich nach oben weisenden Laufflächen 17 der in Fig. 2 miteingezeichneten Laufschiene 19 einer Hängefördereinrichtung abrollen können. Die Laufflächen 17 der Laufschiene 19 verlaufen schräg zueinander entsprechend den Außenflächen eines Satteldaches. Das Laufwerk 3 ist mit seinen Laufrollen 13 hängend an der Laufschiene 19 abgestützt, wobei sich der Laufrollenhalterungsbügel 9 unter der Laufschiene 19 hindurch erstreckt.

Wie aus den Figuren 1a und 1b zu erkennen ist, können die Fördergutträger-Trolleys 1 an Kopplungsbügeln 21 miteinander zu einem Zug gekoppelt werden. Im Beispielsfall befinden sich die Kopplungsbügel 21 an den Längsenden der Tragstange 5. Die Kopplungsbügel 21 haben U-Form, wobei die Schenkel 23, 25 in der Anordnung nach den Figuren 1a und 1b schräg nach unten weisen. Die Figuren 1a und 1b lassen erkennen, dass die Bügelschenkel 23, 25 in der Seitenansicht geneigt relativ zur Vertikalen verlaufen, wobei die Bügelschenkel 23, 25 an einem Ende eines Trolleys 1 entgegengesetzt zu den Bügelschenkeln 23, 25 am anderen Ende des Trolleys 1 geneigt sind.

Wie aus Fig. 2 deutlich zu erkennen ist, liegen die Kopplungsbügel 21 eines Fördergutträger-Trolleys 1 in unterschiedlichen Ebenen 27, 29 schräg zueinander mit einer entsprechenden Neigung relativ zu der vertikalen Mittenebene 15, wobei sich die Ebenen 27, 29 längs der vertikalen Mittenebene 15 schneiden. Eine solche Anordnung der in Längsrichtung der Trolleys hintereinander an den Trolleyenden angeordneten Bügelschenkel 23, 25 ermöglicht es auf einfache Weise, die Kopplungsbügel zweier an einer Laufschiene benachbarter Fördergutträger-Trolleys 1 miteinander in Eingriff zu bringen, wie dies in den Beispielen der Figur 1a und 1b illustriert ist. Der Kopplungsvorgang kann beispielsweise dadurch erfolgen, dass einer der Trolleys 1 an dem zu koppelnden Ende angehoben wird und dann mit dem betreffenden äußeren Bügelschenkel 23 in den Zwischenraum 31 zwischen den Bügelschenkeln 23, 25 des benachbarten Fördergutträger-Trolleys 1 beim Wiederabsenken des vorher angehobenen Trolleyendes eingeführt wird.

Wie insbesondere aus den Figuren 3a und 3b zu erkennen ist, ist die normale Breite b des Zwischenraums 31 zwischen den Bügelschenkeln 23, 25 eines Kopplungsbügels 21 deutlich größer als die normale Dicke d der Bügelschenkel 23, 25, so dass bei dem Kopplungsvorgang ein äußerer Bügelschenkel 23 des anzukoppelnden Fördergutträger-Trolleys mit Spiel in dem Zwischenraum 31 aufgenommen werden kann.

Gemäß der vorliegenden Erfindung sind jedoch in dem Zwischenraum 31 jeweils Engstellen 33 vorgesehen, die durch einen Vorsprung definiert sind, welcher an wenigstens einem der Bügelschenkel 23, 25 vorgesehen ist und in Richtung auf den betreffenden anderen Bügelschenkel 25 oder 23 vorsteht. Die Ausführungsbeispiele der Erfindung gemäß den Figuren 3a und 3b unterscheiden sich durch die konkrete Präparation des Vorsprungs.

Bei dem Ausführungsbeispiel nach Fig. 3a und dem entsprechenden Ausführungsbeispiel nach Fig. 1a weist der jeweils in Längsrichtung des Fördergutträgers 1 außen liegende Bügelschenkel 23 an seinem freien Ende ein kegelstumpfförmig ausgebildetes Kunststoffhütchen 37 auf, das auf das freie Ende 35 des Schenkels 23 aufgesteckt ist, wobei die größere Basisgrundfläche des konischen Hütchens 37 außen liegt. Mit seinem dem inneren Bügelschenkel 25 zugewandten Bereich bildet das Hütchenelement 37 einen Vorsprung 40, der mit dem inneren Bügelschenkel 25 die Engstelle 33 begrenzt.

Bei dem Ausführungsbeispiel nach Fig. 3b und Fig. 1b weist der in Längsrichtung des Fördergutträger-Trolleys 1 innen liegende Bügelschenkel 25 eine durch Materialauftrag gebildete Nase 40a als Vorsprung auf, der zu dem äußeren Bügelschenkel 23 hin vorsteht, um die Engstelle 33 zusammen mit dem äußeren Bügelschenkel 23 zu begrenzen.

Der Vorsprung 40a ist mit Abstand vom freien Ende 41 des inneren Bügelschenkels 25 weiter innen in dem Zwischenraum 31 vorgesehen.

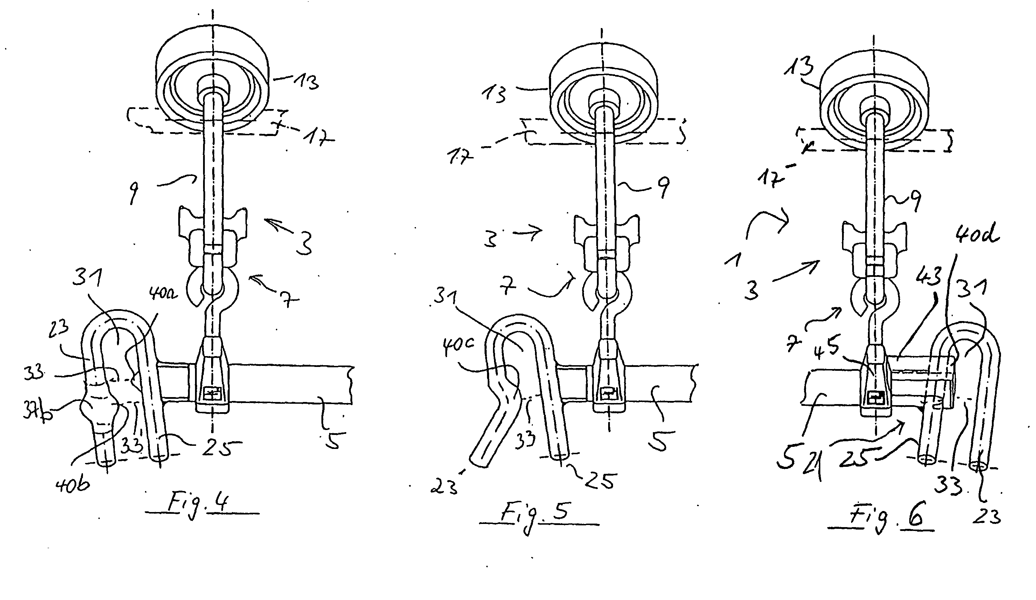

In den Figuren 4 und 5 sind weitere Varianten von erfindungsgemäß gestalteten Kopplungsbügeln 21 gezeigt.

In den Figuren sind jeweils gleiche bzw. einander wirkungsmäßig entsprechende Elemente mit jeweils den gleichen Bezugszeichen gekennzeichnet, so dass hinsichtlich der weiteren Figuren 4 und 5 im Wesentlichen auf die Beschreibung der Figuren 1a - 3b Bezug genommen werden kann.

Gemäß Fig. 4 befindet sich auf dem äußeren Bügelschenkel 23 ein Manschettenelement 37b mit einer Ausbauchung 40b, welche den Vorsprung zur Begrenzung der Engstelle 33' darstellt.

Die Manschette 37b gemäß Fig. 4 kann z.B. aus einem weichelastischen Kunststoff oder dgl. hergestellt sein. Sie ist auf den Metallbügel 23 aufgeschoben worden.

Gemäß Fig. 5 ist der äußere Bügelschenkel 23 des Kopplungsbügels so gebogen, dass er einen Vorsprung 40c zur Begrenzung der Engstelle 33 aufweist.

Fig. 6 zeigt eine weitere Variante der Realisierung einer Engstelle 33 des Zwischenraums 31 zwischen den Bügelschenkeln 23, 25 eines Kopplungsbügels 21. Bei dem Ausführungsbeispiel nach Fig. 6 durchsetzt der Kopplungsbügel 21 mit seinem in Längsrichtung der Tragstange 5 innen liegenden Bügelschenkel 25 einen Endabschnitt 43, der von einem am Tragstangenende 5 vorgesehenen Begrenzungselement 45 in Längsrichtung der Tragstange 5 nach außen absteht. Der in den Zwischenraum 31 hineinreichende Bereich 40d des Endabschnitts 43 bildet den Vorsprung, der zusammen mit dem äußeren Bügelschenkel 23 die Engstelle 33 begrenzt.

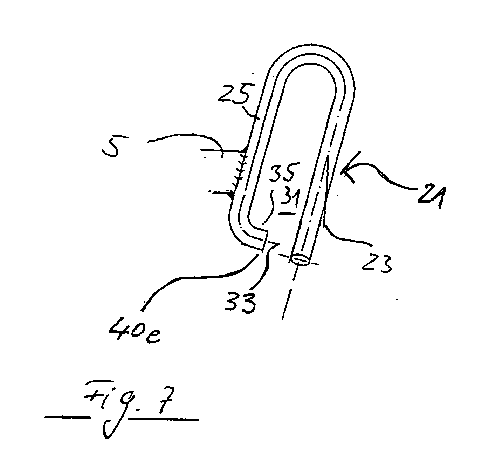

Fig. 7 zeigt eine weitere Variante der Realisierung einer Engstelle 33 des Zwischenraumes 31 zwischen den Bügelschenkeln 23, 25 eines Kopplungsbügels 21. Bei dem Ausführungsbeispiel nach Fig. 7 ist das freie Ende 35 des inneren Bügelschenkels 25 zu dem äußeren Bügelschenkel 23 hin abgeknickt bzw. umgebogen, so dass sich die Engstelle bei 33 ergibt. Der abgebogene Endbereich 40e bildet somit den Vorsprung, der zusammen mit dem äußeren Bügelschenkel 23 die Engstelle 33 begrenzt.

Alternativ oder zusätzlich könnte auch das freie Ende des Bügelschenkels 23 zum Bügelschenkel 25 hin abgebogen sein.

## Patentansprüche

1. Fördergutträger zum Transport von Fördergut in einer Hängefördereinrichtung, wobei der Fördergutträger (1) Laufrollen (13) aufweist, mit denen er an einer Laufschiene (19) der Fördereinrichtung hängend abstützbar und dabei längs der Laufschiene (19) verfahrbar ist, und wobei der Fördergutträger (1) an seinen entgegengesetzten Längsenden jeweils wenigstens einen insbesondere U-förmigen Kopplungsbügel (21) mit zwei in Längsrichtung des Fördergutträgers (1) hintereinander liegenden Bügelschenkeln (23, 25) aufweist, deren freie Enden in der Transportanordnung des Fördergutträgers an der Laufschiene seitlich nach unten weisen und die einen Zwischenraum (31) begrenzen, in den ein äußerer Bügelschenkel (23) eines dem Fördergutträger (1)auf einer Laufschiene (19) benachbarten, gleichartigen Fördergutträgers (1) einführbar ist, um die Fördergutträger (1) zur Bildung eines Zuges aneinander zu koppeln,
**dadurch gekennzeichnet,**
**dass** an wenigstens einem der Bügelschenkel (23, 25) der jeweiligen Kopplungsbügel (21) wenigstens ein in den gemeinsamen Zwischenraum (31) hineinreichender Vorsprung (40; 40a; 40b; 40c; 40d) vorgesehen ist, so dass der Zwischenraum (31) wenigstens eine lokal begrenzte Engstelle (33; 33') aufweist.

2. Fördergutträger nach Anspruch 1, **dadurch gekennzeichnet, dass** der Vorsprung (40) durch ein am freien Ende (35) des vorzugsweise äußeren Bügelschenkels (23) des Kopplungsbügels (21) vorgesehenes Element (37) gebildet ist.

3. Fördergutträger nach Anspruch 1 oder 2, **dadurch gekennzeichnet, dass** auf einem der Bügelschenkel (23, 25) eine Manschette (37b) oder/und ein Hütchenelement (37) sitzt, die bzw. das den Vorsprung (40; 40b) bildet.

4. Fördergutträger nach einem der vorhergehenden Ansprüche, **dadurch gekennzeichnet, dass** der Vorsprung (40b) aus einem elastischen Material, insbesondere aus Kunststoff oder/und Gummi, gebildet ist.

5. Fördergutträger nach einem der Ansprüche 1 - 3, **dadurch gekennzeichnet, dass** die Bügelschenkel (23, 25) und der Vorsprung (40a; 40c) aus Metall bestehen.

6. Fördergutträger nach einem der Ansprüche 1 - 5, **dadurch gekennzeichnet, dass** der Kopplungsbügel (21) an einem Halteabschnitt (43) angeordnet ist, welcher mit einem in den Zwischenraum (31) zwischen den Bügelschenkeln (23, 25) hineinreichenden Bereich den Vorsprung (40d) bildet.

7. Fördergutträger nach Anspruch 1 oder 2, **dadurch gekennzeichnet, dass** der Vorsprung (40e) dadurch gebildet ist, dass das freie Ende (35) eines der Bügelschenkel (25) in Richtung zu dem anderen Bügelschenkel (23) des betreffenden Kopplungsbügels (21) hin gebogen ist.

## Claims

1. Load carrier for the conveyance of items in an overhead conveyor system, whereby the load carrier (1) comprises rollers (13) by means of which it can be suspended on a running rail (19) of the carrier device and can be moved along the running rail (19) thereby, and whereby the load carrier (1) at its opposite longitudinal ends has at least one in particular U-shaped coupling stirrup (21) with two stirrup legs (23, 25) lying behind one another in longitudinal direction of the load carrier ( I ), the free ends of which in the arrangement of the load carrier on the running rail point laterally downwards and define a space (31), in which an outer stirrup leg (23) of a similar load carrier (1) adjacent to the load carrier (1) on an running rail (19) can be inserted, in order to couple the load carriers (1) together to form a train, **characterised in that** on at least one of the stirrup legs (23, 25) of the respective coupling stirrup (21) at least one projection (40; 40a; 40b; 40c; 40d) extending into the common space (31) is provided, so that the space (31) has at least one locally delimited narrow point (33; 33').

2. Load carrier according to Claim 1, **characterised in that** the projection (40) is formed by an element (37) provided on the free end (35) of preferably the outer stirrup leg (23) of the coupling stirrup (21).

3. Load carrier according to Claim 1 or 2, **characterised in that** on one of the stirrup legs (23, 25) there is a collar (37b) and/or a little cap (37) which forms the projection (40; 40b).

4. Load carrier according to one of the preceding Claims, **characterised in that** the projection (40b) is made from an elastic material, in particular plastic and/or rubber.

5. Load carrier according to one of Claims 1 to 3, **characterised in that** the stirrup legs (23, 25) and the projection (40a; 40c) are made of metal.

6. Load carrier according to one of Claims 1-5, **characterised in that** the coupling stirrup (21) is arranged on a holding section (43) which, with an area extending into the space (31) between the stirrup legs (23, 25), forms the projection (40d).

7. Load carrier according to Claim 1 or 2, **characterised in that** the projection (40e) is designed so that the free end (35) of one of the stirrup legs (25) is bent towards the other stirrup leg (23) of the coupling stirrup (21) concerned.

## Revendications

1. Porte-charge pour le transport d'un produit à transporter dans un convoyeur aérien, le porte-charge (1) comportant des galets de roulement (13) par lesquels il peut être soutenu suspendu à un rail de roulement (19) du convoyeur, et est ainsi déplaçable le long du rail de roulement (19), et dans lequel le porte-charge (1) comporte à chacune de ses extrémités longitudinales opposées au moins un étrier d'accouplement (21) en particulier en forme de U avec deux branches d'étrier (23, 25) se succédant dans la direction longitudinale du porte-charge (1), branches dont les extrémités libres sont dirigées latéralement vers le bas dans l'agencement de transport du porte-charge sur le rail de roulement, et qui délimitent un interstice (31) dans lequel on peut introduire une branche d'étrier extérieure (23) d'un porte-charge (1) de même type, voisin du porte-charge (1) sur un rail de roulement (19), afin d'accoupler l'un à l'autre les porte-charges (1) pour former un train,
**caractérisé**
**en ce que** sur au moins l'une des branches d'étrier (23, 25) des étriers d'accouplement (21) respectifs il est prévu au moins une saillie (40 ; 40a ; 40b ; 40c ; 40d) s'étendant dans l'interstice (31) commun, ce qui fait que l'interstice (31) présente au moins un point d'étranglement (33 ; 33') limité localement.

2. Porte-charge selon la revendication 1, **caractérisé en ce que** la saillie (40) est formée par un élément (37) prévu à l'extrémité libre (35) de la branche d'étrier (23), de préférence extérieure, de l'étrier d'accouplement (21).

3. Porte-charge selon la revendication 1 ou 2, **caractérisé en ce que** sur l'une des branches d'étrier (23, 25) est calé un manchon (37b) ou/et un élément à chapeau (37) qui forme la saillie (40 ; 40b).

4. Porte-charge selon l'une des revendications précédentes, **caractérisé en ce que** la saillie (40b) est formée dans une matière élastique, en particulier en matière synthétique ou/et caoutchouc.

5. Porte-charge selon l'une des revendications 1 à 3, **caractérisé en ce que** les branches d'étrier (23, 25) et la saillie (40a ; 40c) sont en métal.

6. Porte-charge selon l'une des revendications 1 à 5, **caractérisé en ce que** l'étrier d'accouplement (21) est disposé sur une portion de maintien (43) qui forme la saillie (40d) avec une zone s'étendant dans l'interstice (31) entre les branches d'étrier (23, 25).

7. Porte-charge selon la revendication 1 ou 2, **caractérisé en ce que** la saillie (40e) est formée par le fait que l'extrémité libre (35) de l'une des branches d'étrier (25) est courbée en direction de l'autre branche d'étrier (23) de l'étrier d'accouplement (21) concerné.
